# EUROPEAN PATENT APPLICATION

(11) **EP 4 616 918 A2**
(43) Date of publication of application: **17.09.2025**
(21) Application number: 25155582.7
(22) Date of filing: 03.02.2025
(51) Int. Cl.: A62C 3/16

(54) **ENERGY STORAGE DEVICE WITH FIRE EXTINGUISHING FUNCTION**

(30) Priority: 11.03.2024 KR 20240033610
(71) Applicant: SAMSUNG SDI CO., LTD., Yongin-si, Gyeonggi-do 17084 (KR)
(72) Inventor: KIM, Jintaek, 17084 Yongin-si (KR)
(74) Representative: Marks & Clerk LLP

(57) **Abstract**

An energy storage device includes: a case having a mounting space inside the case; a plurality of battery cells installed inside the case; and a fire extinguishing unit extending inside the case and configured to supply a fire extinguishing agent, wherein the fire extinguishing unit is configured to supply an extinguishing liquid to at least one of the battery cells or the mounting space while melting at a temperature of a threshold value or higher.

## Description

### BACKGROUND

### 1. Field

Aspects of some embodiments of the present disclosure relate to an energy storage device equipped with a fire extinguishing function.

### 2. Description of the Related Art

In general, an energy storage system (ESS) is a system that stores surplus electricity or stores electricity produced using renewable energy. By using an energy storage system, power supply and demand can be relatively more smoothly controlled by storing idle power during times of low electricity demand and supplying electricity during times of high electricity demand.

In spaces or facilities where energy storage systems are installed and operated, fires may occur due to electric shock, short circuit, external surge, etc. Accordingly, equipment for suppressing a fire may desirably be installed in energy storage systems.

A fire extinguishing system may include, for example, a fire detection sensor, a sprinkler installed around a battery rack or on the ceiling, or a fire extinguishing agent sprayer.

In some fire extinguishing systems, when a fire occurs in an energy storage device, a fire extinguishing agent may be sprayed from the outside of the energy storage device, which may increase the time and costs required to extinguish the fire.

The above information disclosed in this Background section is only for enhancement of understanding of the background and therefore the information discussed in this Background section does not necessarily constitute prior art.

### SUMMARY

Aspects of some embodiments of the present disclosure relate to an energy storage device equipped with a fire extinguishing function that can extinguish a fire by directly supplying a fire extinguishing agent to the interior of the energy storage device.

Aspects of some embodiments of the present disclosure relate to an energy storage device with a fire extinguishing function, which can extinguish a fire by supplying a fire extinguishing agent directly to the inside of the energy storage device.

In addition, aspects of some embodiments of the present disclosure include an energy storage device with a fire extinguishing function, which can relatively quickly extinguish a fire by supplying a fire extinguishing agent to the inside of the case part when a fire occurs, to immerse battery cells in the fire extinguishing agent.

In addition, aspects of some embodiments of the present disclosure include an energy storage device with a fire extinguishing function, which can extinguish a fire by supplying a fire extinguishing agent to a battery cell where a fire has occurred.

In addition, aspects of some embodiments of the present disclosure include an energy storage device with a fire extinguishing function, which can extinguish a fire by stably supplying a fire extinguishing agent even when a fire occurs.

In a system where a pipe is installed to supply a fire extinguishing agent directly to the inside of an energy storage device, the pipe may be deformed by high temperature heat when a fire occurs, or nozzles of the pipe may be clogged due to foreign substances generated when a fire occurs. Accordingly, some embodiments may include an energy storage system or device with a fire extinguishing function that may be capable of supplying a fire extinguishing agent to the interior of the energy storage device.

According to some embodiments of the present disclosure, an energy storage device with a fire extinguishing function includes: a case part that has a mounting space provided on the inside thereof; a plurality of battery cells that are installed inside the case part; and a fire extinguishing unit that extends to the inside of the case part and supplies (e.g. is configured to supply) a fire extinguishing agent, wherein the fire extinguishing unit supplies (e.g. is configured to supply) an extinguishing liquid to at least one of the battery cells or the mounting space while melting at a temperature of a critical value or higher.

According to some embodiments, the fire extinguishing unit may supply an extinguishing liquid to at least one of the battery cells or the mounting space while melting at a temperature of a critical value or higher.

According to some embodiments, the fire extinguishing unit may include a fire extinguishing pipe that extends along the longitudinal direction of the case part and supplies a fire extinguishing agent to at least one of the battery cells or the mounting space through a portion melted by heat, and a connecting pipe that connects the fire extinguishing pipe and a supply pipe located outside the case part.

According to some embodiments, the melting temperature of the fire extinguishing pipe may be set between 80 °C and 300 °C.

According to some embodiments, the material of the fire extinguishing pipe may include a plastic material.

According to some embodiments, the material of the fire extinguishing pipe may include at least one of polypropylene (PP), linear low density polyethylene (LLDPE), polyvinyl chloride (PVC), polyamide 6 (PA6), or polyamide 66 (PA66).

According to some embodiments, the inner diameter of the fire extinguishing pipe may range from 3 mm to 20 mm.

According to some embodiments, the fire extinguishing pipe may be installed in a state of facing the lateral sides of the battery cells.

According to some embodiments, the battery cells may be arranged in multiple rows along the width direction of the case part.

According to some embodiments, the fire extinguishing pipe may be placed between rows of the battery cells.

According to some embodiments, the energy storage device of the present disclosure may further include a lower panel installed between the bottom portion of the case part and the battery cells to support the bottom portions of the battery cells and block the fire extinguishing agent supplied through the fire extinguishing unit from moving to the bottom surface of the case part.

According to some embodiments, the lower panel may include: a panel body that is installed in a plate shape between the bottom portion of the case part and the battery cells to block the movement of the fire extinguishing agent; a first guide part that is installed on the upper side of the panel body and forms a flow path in the longitudinal direction of the case part to guide the movement of the fire extinguishing agent; and forms a flow path in the width direction of the case part to guide the movement of the fire extinguishing agent.

According to some embodiments of the present disclosure, an energy storage device with a fire extinguishing function includes: a case part that has a mounting space provided on the inside thereof; a plurality of battery cells that are installed inside the case part; a fire extinguishing unit that extends to the inside of the case part and supplies (e.g. is configured to supply) a fire extinguishing agent to at least one of the battery cells or the mounting space; and a lower panel that is installed between the bottom surface of the case part and the battery cells to support the bottom portions of the battery cells and block the movement of the fire extinguishing agent toward the bottom surface of the case part so that the fire extinguishing agent sprayed from the fire extinguishing unit is stored inside the case part.

According to some embodiments, the lower panel may include: a panel body that is installed in a plate shape between the bottom surface of the case part and the battery cells to block the movement of the fire extinguishing agent; a first guide part that is installed on the upper side of the panel body and forms a flow path in the longitudinal direction of the case part to guide the movement of the fire extinguishing agent; a second guide part that is installed on the upper side of the panel body and forms a flow path in the width direction of the case part to guide the movement of the fire extinguishing agent; and a support protrusion that protrudes upward from the panel body and supports the bottom portions of the battery cells.

According to some embodiments, the lower panel may further include an edge member that protrudes upward from the edge of the panel body and supports the lateral sides of the battery cells.

According to some embodiments, the lower panel may be made of an insulating material.

According to some embodiments, the energy storage device of the present disclosure may further include a flame blocking member that is placed between rows of the battery cells, along with the fire extinguishing pipe, to block flame propagation between neighboring battery cells.

According to some embodiments, the flame blocking member may include: a plate-shaped upper blocking member that is positioned on the upper side of the fire extinguishing pipe; and a plate-shaped lower blocking member that is positioned on the lower side of the fire extinguishing pipe.

At least some of the above and other features of the invention are set out in the claims.

### BRIEF DESCRIPTION OF DRAWINGS

FIG. 1 is an exploded perspective view of an energy storage device with a fire extinguishing function, according to some embodiments of the present disclosure.
FIG. 2 is a perspective view of an energy storage device with a fire extinguishing function, according to some embodiments of the present disclosure.
FIG. 3 is a perspective view showing a fire extinguishing pipe installed inside a case part according to some embodiments of the present disclosure.
FIG. 4 is a perspective view showing a fire extinguishing pipe located on lateral sides of battery cells according to some embodiments of the present disclosure.
FIG. 5 is a perspective view showing a state in which a fire extinguishing agent is sprayed from a fire extinguishing pipe according to some embodiments of the present disclosure.
FIG. 6 is a perspective view showing a state in which battery cells according to some embodiments of the present disclosure are loaded on a lower panel.
FIG. 7 is a perspective view showing a state in which a partition protrusion supports a flame blocking member according to some embodiments of the present disclosure.
FIG. 8 is a perspective view showing a partition protrusion and a connecting passage of a lower panel according to some embodiments of the present disclosure.
FIG. 9 is a front sectional view showing a state in which battery cells are installed, according to some embodiments of the present disclosure.
FIG. 10 is a front sectional view showing a state in which a fire extinguishing agent having moved to the bottom portions of battery cells moves in the longitudinal direction, according to some embodiments of the present disclosure.
FIG. 11 is a side sectional view showing a state in which battery cells are installed, according to some embodiments of the present disclosure.
FIG. 12 is a front sectional view showing a state in which a fire extinguishing agent having moved to the bottom portions of battery cells moves in the width direction, according to some embodiments of the present disclosure.
FIG. 13 is a plan view showing a state in which a fire has occurred in one of the battery cells, according to some embodiments of the present disclosure.
FIG. 14 is a graphical representation of the temperatures of the battery cell where a fire is extinguished by the operation of an energy storage device with a fire extinguishing function, according to some embodiments of the present disclosure.

### DETAILED DESCRIPTION

Hereinafter, aspects of some embodiments of the present disclosure will be described in more detail with reference to the accompanying drawings.

Aspects of some embodiments of the present disclosure are illustrated and described to more fully describe embodiments according to some embodiments of the present disclosure to those skilled in the art, and the following embodiments may be embodied in many different forms and should not be construed as being limited to the example embodiments set forth herein. Rather, these disclosed embodiments are provided so that this disclosure will be more thorough and more complete and will more fully convey the aspects and features of embodiments according to some embodiments of the present disclosure to those skilled in the art.

In addition, in the accompanying drawings, sizes or thicknesses of various components are exaggerated for brevity and clarity. Like numbers refer to like elements throughout. As used herein, the term "and/or" includes any and all combinations of one or more of the associated listed items. In addition, it will be understood that when an element A is referred to as being "connected to" an element B, the element A can be directly connected to the element B or an intervening element C may be present therebetween such that the element A and the element B are indirectly connected to each other.

The terminology used herein is for the purpose of describing particular embodiments only and is not intended to be limiting of the disclosure. As used herein, the singular forms are intended to include the plural forms as well, unless the context clearly indicates otherwise. It will be further understood that terms "comprise" and/or "comprising," when used in this specification, specify the presence of stated features, numbers, steps, operations, elements, and/or components, but do not preclude the presence or addition of one or more other features, numbers, steps, operations, elements, components, and/or groups thereof.

It will be understood that, although the terms first, second, etc. may be used herein to describe various members, elements, regions, layers and/or sections, these members, elements, regions, layers and/or sections should not be limited by these terms. These terms are only used to distinguish one member, element, region, layer and/or section from another. Thus, for example, a first member, a first element, a first region, a first layer and/or a first section discussed below could be termed a second member, a second element, a second region, a second layer and/or a second section without departing from the teachings of the present invention.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the element or feature in the figures is turned over, elements described as "below" or "beneath" other elements or features would then be oriented "on" or "above" the other elements or features. Thus, the term "below" can encompass both an orientation of above and below.

Hereinafter, an energy storage device 1 with a fire extinguishing function, according to some embodiments of the present disclosure, will be described.

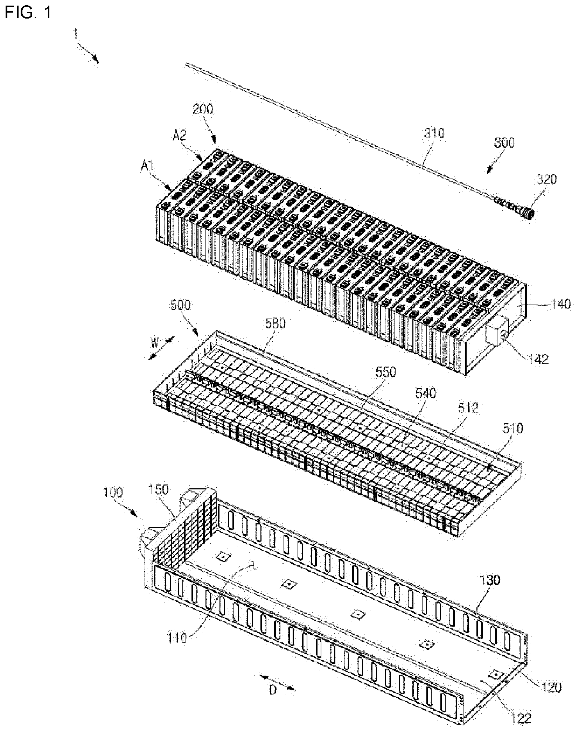

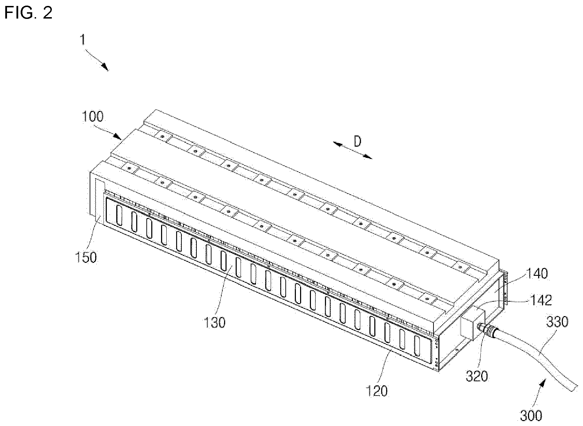

FIG. 1 is an exploded perspective view of an energy storage device 1 with a fire extinguishing function, according to some embodiments of the present disclosure, and FIG. 2 is a perspective view of an energy storage device 1 with a fire extinguishing function, according to some embodiments of the present disclosure.

As shown in FIGS. 1 and 2, the energy storage device 1 with a fire extinguishing function, according to some embodiments of the present disclosure, has a fire extinguishing pipe 310 extending to the inside of the case part 100 in a system for spraying a fire extinguishing agent 400 from the outside of the energy storage device. In addition, the fire extinguishing pipe 310 melts due to flames or heat when a fire occurs, and supplies the fire extinguishing agent 400 to the inside of the case part 100, thereby effectively suppressing a thermal runaway phenomenon of the battery cells 200, which causes a fire.

According to some embodiments, the fire extinguishing pipe made of a plastic material is placed between one of the battery cells 200 and a neighboring battery cell 200, and thus, the fire extinguishing pipe 310 melts due to heat generated when a fire occurs to the battery cell 200, so that the fire extinguishing agent 400 is sprayed. A passage for discharging the fire extinguishing agent 400 is formed as the fire extinguishing pipe 310 melts by heat, and the fire extinguishing agent 400 sprayed from the fire extinguishing pipe 310 is highly probable to be injected into the battery cell 200 where a fire has occurred, thereby providing a directly-spraying, automatically openable fire extinguishing system.

The energy storage device 1 with a fire extinguishing function, according to some embodiments of the present disclosure, includes a case part 100, battery cells 200, a fire extinguishing unit (or fire extinguisher or fire extinguishing component or fire extinguishing assembly) 300, and a lower panel 500. In addition, the energy storage device 1 of the present disclosure may further include a flame blocking member 600.

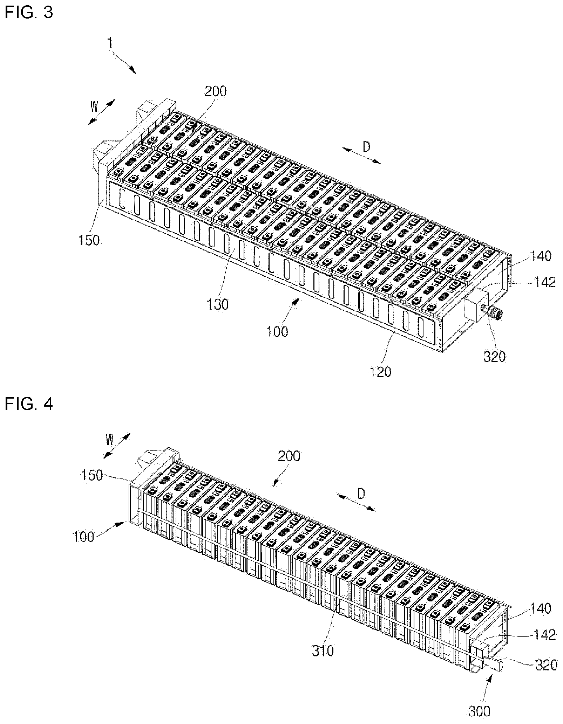

FIG. 3 is a perspective view showing a fire extinguishing pipe 310 installed inside a case part 100, according to some embodiments of the present disclosure, and FIG. 4 is a perspective view showing a fire extinguishing pipe 310 located on lateral sides of battery cells 200, according to some embodiments of the present disclosure.

As shown in FIGS. 2 to 4, various modifications are possible within the technical concept in which the mounting space 110 is provided inside the case part 100. The battery cells 200, the fire extinguishing unit 300, the lower panel 500, and the flame blocking member 600 may be installed in the mounting space 110.

A body of the case part 100 has an upper side opened, and the opened upper side of the case part 100 is opened/closed by a cover member 160. According to some embodiments of the present disclosure, the case part 100 includes a lower plate 120, side plates 130, a first end plate 140, a second end plate 150, and a cover member 160.

The lower plate 120 is shaped of a panel that forms the bottom portion of the case part 100. The upper surface of the lower plate 120 includes the bottom surface 122 of the case part 100. The lower plate 120 may include an exhaust hole for heat dissipation or discharge of gas that may occur inside the case part 100. The lower plate 120, according to some embodiments of the present disclosure, is a rectangular plate, and the side plates 130 are installed on both sides of the lower plate 120 in the width direction (W).

The side plates 130 extend upward from both sides of the lower plate 120 in the width direction (W) to form side walls of the case part 100. The side plates 130 may be rectangular panels, and the bottom portions of the side plates 130 are connected to the lower plate 120. The side plates 130, together with the lower plate 120, form the mounting space 110 having an upper side opened.

The first end plate 140 is installed on one side of the case part 100 in the longitudinal direction (D), and the second end plate 150 is installed on the other side of the case part 100 in the longitudinal direction (D). The first end plate 140 and the second end plate 150 are shaped of a plate and are installed in the vertical direction.

A side protrusion 142 for installing the connecting pipe 320 of the fire extinguishing unit 300 is provided in the first end plate 140, which will be described later. The side protrusion 142 is a protrusion that is connected to the lateral side of the first end plate 140 and protrudes outward from the first end plate 140.

Inside the mounting space 110, the battery cells 200, the fire extinguishing unit 300, the lower panel 500, and the flame blocking member 600 may be installed. The cover member 160 is installed above the case part 100, and the cover member 160 covers an entrance of the mounting space 110 in a state in which the battery cells 200, the fire extinguishing unit 300, the lower panel 500, and the flame blocking member 600 are installed in the mounting space 110.

The lower panel 500 is located on the upper side of the lower plate 120, the battery cells 200 are located on the upper side of the lower panel 500, and the cover member 160 is located on the upper side of the battery cells 200. In addition, the lower panel 500, the first end plate 140, the second end plate 150, and the side plates 130 are formed in the shape of a concave container with an open upper side. Therefore, after the fire extinguishing agent 400 sprayed from the fire extinguishing unit 300 falls to the lower panel 500, the water level gradually increases, and thus the battery cells 200 are submerged in the fire extinguishing agent 400.

A plurality of battery cells 200 are installed in the mounting space 110 provided inside the case part 100. The battery cells 200 may be arranged in a plurality of rows along the width direction (W) of the case part 100. In addition, the battery cells 200 may be connected in series, parallel, or series-parallel.

An electrode assembly is accommodated inside a battery case that forms outer shapes of the battery cells 200, and the upper portion of the battery case is covered by a cap plate. The electrode assembly may be constructed by winding, stacking, or laminating in a state in which a separator is placed between a positive electrode plate and a negative electrode plate each having a region, for example, a coating portion, to which an active material is applied. In addition, a vent having a smaller thickness than other areas may be formed at the center (or approximately the center) of the cap plate. In addition, a first electrode terminal and a second electrode terminal, which are electrically connected to the electrode assembly, may be located on both sides of the cap plate.

Because the configuration of battery cells 200 of the present disclosure is a known configuration, some repetitive detailed descriptions thereof may be omitted.

The battery cells 200 according to some embodiments of the present disclosure are located inside the case part 100 and arranged in two rows, but the battery cells 200 are not limited to this and can be arranged in one row or three or more rows.

The lower sides of the battery cells 200 are supported by the lower panel 500, and the upper sides of the battery cells 200 face the cover member 160. The battery cells 200 according to some embodiments of the present disclosure are shaped of a rectangular parallelepiped and may be configured to extend in the vertical direction, but not limited thereto, and of course various modifications are possible.

In the energy storage device 1 with a fire extinguishing function, according to some embodiments of the present disclosure, because the fire extinguishing pipe 310 that supplies the fire extinguishing agent 400 extends inside the case part 100 and is installed at a position facing the battery cells 200, the fire extinguishing agent 400 can be supplied directly to the inside of the energy storage device when a fire occurs, thereby extinguishing the fire. When a fire occurs in any of the battery cells 200 or inside the case part 100 where the battery cells 200 are installed, the fire extinguishing agent 400 is transferred to the inside of the case part 100 through the fire extinguishing unit 300, thereby extinguishing the fire.

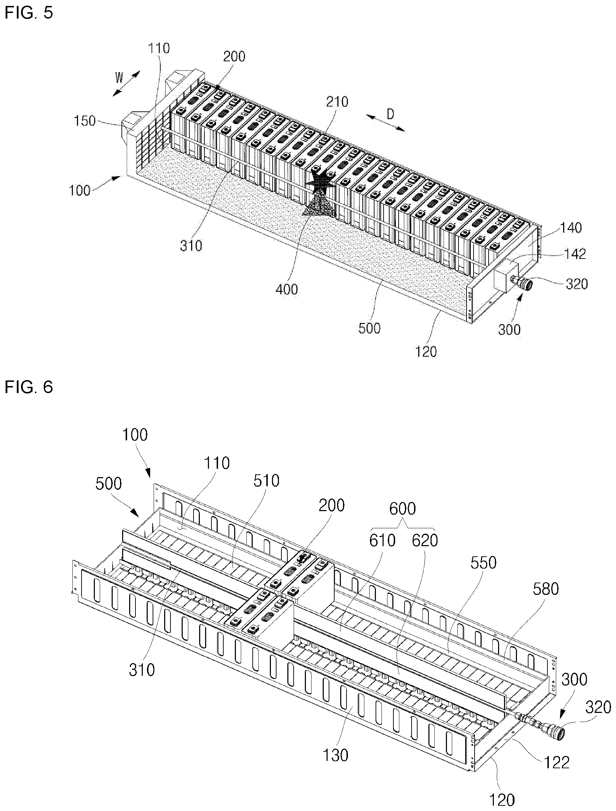

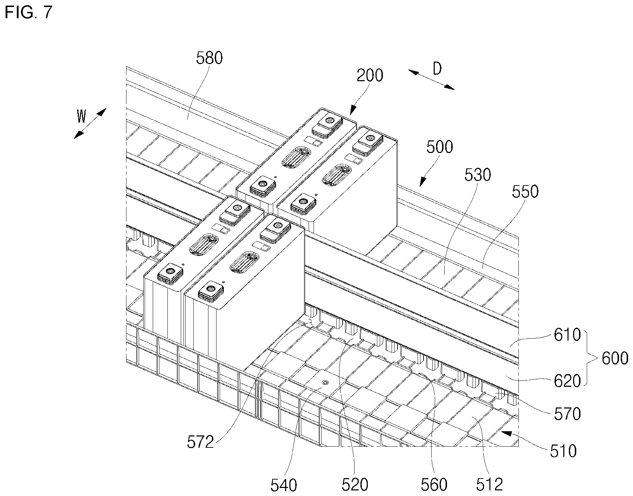

The fire extinguishing unit 300 will now be described in more detail with reference to the drawings. FIG. 5 is a perspective view showing a state in which a fire extinguishing agent 400 is sprayed from a fire extinguishing pipe 310 according to some embodiments of the present disclosure, FIG. 6 is a perspective view showing a state in which battery cells 200 according to some embodiments of the present disclosure are loaded on a lower panel 500, and FIG. 7 is a perspective view showing a state in which a partition protrusion 570 supports a flame blocking member 600 according to some embodiments of the present disclosure.

As shown in FIGS. 5 to 7, various modifications are possible within the technical concept in which the fire extinguishing unit 300 extends to the inside of the case part 100 to supply the fire extinguishing agent 400. In the fire extinguishing unit 300 according to some embodiments of the present disclosure, various modifications are possible within the technical concept in which a fire extinguishing agent is supplied to at least one of the battery cells 200 or the mounting space 110 while melting at a temperature of a critical value (or threshold value or threshold temperature (e.g., a set or predetermined threshold value or a set or predetermined threshold temperature) or higher.

The fire extinguishing unit 300, according to some embodiments of the present disclosure, includes a fire extinguishing pipe 310, a connecting pipe 320, and a supply pipe 330.

The fire extinguishing pipe 310 extends along the longitudinal direction (D) of the case part 100 and may supply a fire extinguishing agent to at least one of the battery cells 200 or the mounting space 110 through a portion melted by heat. The fire extinguishing pipe 310 extends to the inside of the case part 100, and the fire extinguishing agent 400 can be supplied to the inside of the case part 100 as the pipe melts due to the heat generated when a fire occurs. For example, when a fire occurs to any of the battery cells 200 in a state in which the fire extinguishing pipe 310 is installed to face the lateral sides of battery cells 200, the fire extinguishing agent 400 is sprayed as the fire extinguishing pipe 310 facing the battery cell 200 where the fire has occurred melts. The fire extinguishing agent 400 discharged from the fire extinguishing pipe 310 is sprayed onto the battery cell 200 where the fire has occurred and the surroundings thereof, and thus the fire can be relatively quickly extinguished.

In a state in which the fire extinguishing pipe 310 supplying the fire extinguishing agent 400 extends to the inside of the case part 100, various modifications to the melting temperature of the fire extinguishing pipe 310 are possible within the technical concept in which the fire extinguishing agent 400 is supplied to the inside of the case part 100 while melting at a temperature of a critical value or higher.

The melting temperature of the fire extinguishing pipe 310, according to some embodiments of the present disclosure, may be set between 80 °C and 300 °C. If the melting temperature of the fire extinguishing pipe 310 is set to less than 80 °C, the internal temperature of the energy storage device 1 with a fire extinguishing function, which operates in summer, may rise to high temperatures, which may cause a malfunction in which the fire extinguishing pipe 310 melts and the fire extinguishing agent 400 is ejected. Therefore, the melting temperature of the fire extinguishing pipe 310 is set to 80 °C or higher, so that the fire extinguishing pipe 310 melts and the fire extinguishing agent 400 is ejected only when a fire occurs.

The fire extinguishing agent 400 moving along the fire extinguishing pipe 310 may be in a liquid or gas phase, and in some cases, may be in a mixed state of liquid and gas phases. The fire extinguishing agent 400 according to some embodiments of the present disclosure may include any one of heptafluoropropane (HFC-227ea), water-based fire extinguishing agent 400 for cooling and fire extinguishing (water, Halon 1211, Halon 1301, reinforced solution, acid alkali), and 1,1,1,2,3,3,3-heptafluoropropane.

Heptafluoropropane (HFC-227ea) is a fire extinguishing agent with fire extinguishing performance, eco-friendliness, and human safety. Heptafluoropropane (HFC-227ea) is a fire extinguishing agent that can comply with environmental regulations and has a low impact on the environment due to low ozone layer depletion or global warming. When heptafluoropropane (HFC-227ea) is used, electrical insulation is excellent, and a fire can be relatively quickly extinguished even in the event of a power outage, thereby preventing or reducing major losses.

The water-based fire extinguishing agent 400 for cooling and fire extinguishing, is a fire extinguishing agent used to extinguish a fire and cool a fired area when a fire occurs. The fire extinguishing agent 400 is mainly water-based, and instead of directly extinguishing a fire, serves to suppress the spread of fire by suppressing flames and lowering the temperature. The water-based fire extinguishing agent 400 for cooling and fire extinguishing, extinguishes a fire by lowering the surrounding temperature by absorbing and evaporating heat from the fire, and prevents or reduces the spread of fire by reducing the flames and suppressing oxidation reactions.

The artificial gas, which is composed of 1,1,1,2,3,3,3-heptafluoropropane, also known as heptafluoropropane, is stored in the form of liquid and is sprayed through a special device or ejected by means of a sprayer, in the event of a fire. 1,1,1,2,3,3,3-heptxafluoropropane is converted from a fire extinguishing agent into a gas state and spreads throughout the space to extinguish flames and extinguish the fire. 1,1,1,2,3,3,3-heptafluoropropane has high fire extinguishing efficiency and relatively quickly cools a fired area to suppress oxidation reactions. 1,1,1,2,3,3,3-heptafluoropropane has various advantages, the biggest advantage being a high fire extinguishment speed. 1,1,1,2,3,3,3-heptafluoropropane can relatively quickly extinguish a fire and suppress flames to prevent or reduce the spread of fire. In addition, unlike water, 1,1,1,2,3,3,3-heptafluoropropane is not electrically conductive and non-incendive, and thus can be safely used even in spaces with electrical equipment. In addition, 1,1,1,2,3,3,3-heptafluoropropane evaporates relatively quickly, leaving relatively little residue after a fire is extinguished, thereby minimizing or reducing property damage.

The materials of the fire extinguishing pipe 310 may include a plastic material in consideration of the melting temperature of the fire extinguishing pipe 310. More specifically, the materials of the fire extinguishing pipe 310 may include at least one of polypropylene (PP), linear low density polyethylene (LLDPE), polyvinyl chloride (PVC), polyamide 6 (PA6), or polyamide 66 (PA66). For example, the fire extinguishing pipe 310 may include one or more of polypropylene (PP), linear low density polyethylene (LLDPE), polyvinyl chloride (PVC), polyamide 6 (PA6), and polyamide 66 (PA66). Because the fire extinguishing pipe 310 includes a plastic material that is a relatively cheap material, production costs can be reduced and formability can be relatively improved.

The melting temperature of polypropylene (PP) is 139 °C, the melting temperature of linear low density polyethylene (LLDPE) is 126 °C, the melting temperature of polyvinyl chloride (PVC) is 150 °C, the melting temperature of polyamide 6 (PA6) is 223 °C, and the melting temperature of polyamide 66 (PA66) is 263 °C.

The fire extinguishing pipe 310 may be shaped of a circular pipe extending in the longitudinal direction (D) of the case part 100, and the inner diameter of the fire extinguishing pipe 310 may be 3 mm to 20 mm. If the inner diameter of the fire extinguishing pipe 310 is less than 3 mm, the flow rate of the fire extinguishing pipe 310 is low, so that when a fire occurs, the supply of the fire extinguishing pipe 310 is not smooth, and the time required to extinguish the fire increases. In addition, when the inner diameter of the fire extinguishing pipe 310 is greater than 20 mm, interference may occur with the location where the battery cells 200 are installed. When the size of the case part 100 is increased for solving the interference between the fire extinguishing pipe 310 and the battery cells 200, the installation space for the energy storage device 1 with a fire extinguishing function may be increased, which is problematic. The inner diameter of the fire extinguishing pipe 310 is determined so as to ensure that a sufficient flow rate is supplied in consideration of the capacity and size of the battery cells 200 and the installation space.

The fire extinguishing pipe 310 may be installed so as to face an upper side or lower side of the battery cells 200. However, when the fire extinguishing pipe 310 is installed at a position where it faces the upper side of the battery cells 200, a problem of interference between the fire extinguishing pipe 310 and the cover member 160 may occur. In addition, when the fire extinguishing pipe 310 is installed in a position facing the lower side of the battery cells 200, an interference problem between the fire extinguishing pipe 310 and the lower panel 500 may occur.

Therefore, the fire extinguishing pipe 310 according to some embodiments of the present disclosure is installed in a state of facing the lateral sides of the battery cells 200. When a fire occurs to any of the battery cells 200, the melting operation of the fire extinguishing pipe 310 installed in a state of facing the lateral sides of the battery cells 200 can be achieved relatively quickly by the heat generated by fire. Assuming that the distance between the fire extinguishing pipe 310 and the bottom portion of the lower panel 500 is a first distance, and the distance between the top end of the battery cells 200 and the bottom portion of the lower panel 500 is a second distance, the first distance is shorter than the second distance. The installation height of the fire extinguishing pipe 310 is lower than the top height of the battery cells 200. The distance between the fire extinguishing pipe 310 and the bottom portion of the lower panel 500, according to some embodiments of the present disclosure, is set to 30 mm to 110 mm.

The fire extinguishing pipe 310 may be located inside the case part 100 and may extend in the longitudinal direction (D) of the case part 100. The number of fire extinguishing pipes 310 can be increased or decreased in consideration of the number and arrangement of the battery cells 200. For example, when the battery cells 200 are arranged in three rows, various modifications are possible, such as two fire extinguishing pipes 310 being provided and placed between rows. The fire extinguishing pipe 310 may be placed between the rows of the battery cells 200.

The fire extinguishing pipe 310 is arranged in a circular tube shape to reduce friction between the fire extinguishing agent 400 moving along the fire extinguishing pipe 310 and the fire extinguishing pipe 310.

Various modifications are possible within the technical concept in which the connecting pipe 320 is connected to the end of the fire extinguishing pipe 310, and connects the fire extinguishing pipe 310 and the supply pipe 330 located outside the case part 100. According to some embodiments of the present disclosure, the connecting pipe 320 is supported by a side protrusion 142 provided on the first end plate 140. The connecting pipe 320 protrudes to the outside of the side protrusion 142 and is connected to the supply pipe 330 that supplies the fire extinguishing agent 400. Because the melting temperature of the connecting pipe 320 is higher than that of the fire extinguishing pipe 310, the operation of supplying the fire extinguishing agent 400 supplied through the supply pipe 330 to the fire extinguishing pipe 310 can be stably performed even in the event of a fire.

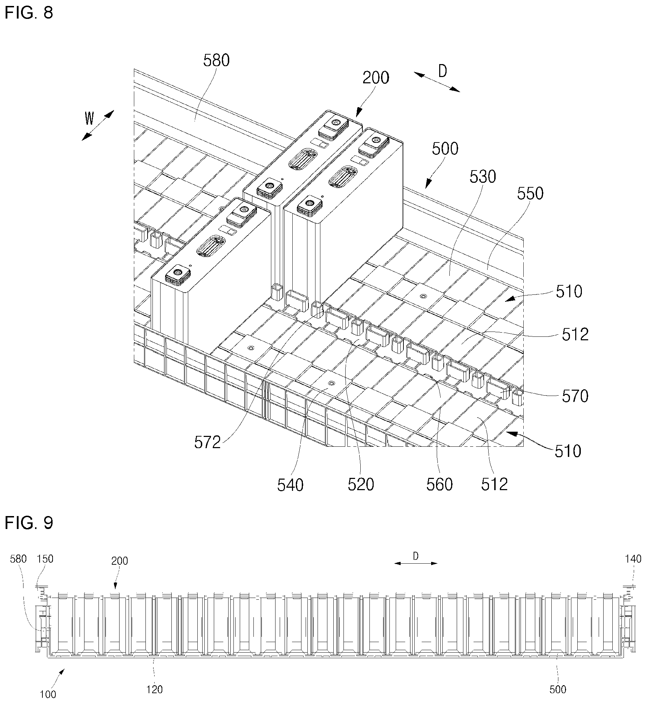

The lower panel 500 is installed below the battery cells 200 to support the lower part of the battery cells 200. The lower panel 500 will now be explained with reference to the attached drawing. FIG. 8 is a perspective view showing a partition protrusion 570 and a connecting passage 572 of the lower panel 500, according to some embodiments of the present disclosure.

As shown in FIGS. 6 to 8, the lower panel 500 is installed between the bottom surface 122 of the case part 100 and the battery cells 200 to support the lower part of the battery cells 200, and various modifications are possible within the technical concept in which the fire extinguishing agent 400 supplied through the fire extinguishing unit 300 is blocked from moving to the bottom surface 122 of the case part 100. When a fire occurs, the fire extinguishing agent 400 sprayed from the fire extinguishing pipe 310 is blocked from moving to the lower side of the case part 100 by the lower panel 500, and thus the battery cells 200 installed inside the case part 100 can be submerged in the fire extinguishing agent 400 to relatively quickly extinguish the fire.

The lower panel 500 may be made of an insulating material. Because the lower panel 500 contains an insulating material, electrical contact between the battery cells 200 and the lower plate 120 can be prevented or reduced to ensure electrical stability. The insulating material may include plastic, rubber, ceramic, fiberglass, etc. Because the insulating material has low thermal conductivity and thus effectively blocks heat, heat dissipation in the energy storage device 1 with a fire extinguishing function can be minimized or reduced, thereby preventing or reducing overheating. In addition, the lower panel 500 may include fire-resistant and corrosion-resistant materials.

To allow the fire extinguishing agent 400 to be stored inside the case part 100 so that the battery cells 200 are submerged in the fire extinguishing agent 400, the lower panel 500 is not provided with a separate hole for discharging the fire extinguishing agent 400) to the lower side. According to some embodiments of the present disclosure, the lower panel 500 includes at least one of a panel body 510, a first guide part (or first guide) 520, a second guide part (or second guide) 530, a support protrusion 540, a side protrusion 550, a reinforcement protrusion 560, a partition protrusion 570, or an edge member 580.

The panel body 510 is installed in a plate shape between the bottom surface 122 of the case part 100 and the battery cells 200, and various modifications are possible within the technical concept of blocking the movement of the fire extinguishing agent 400. According to some embodiments of the present disclosure, the panel body 510 is shaped of a plate installed at the bottom portions of the battery cells 200 and supports the bottom portions of the battery cells 200. The panel body 510 has a rectangular plate shape and is installed between the bottom portions of the battery cells 200 and the lower plate 120. Because the panel body 510 is not provided with a separate hole, the fire extinguishing agent 400 accumulating on the upper side of the panel body 510 can be blocked from moving downward through the panel body 510.

The first guide part 520 is installed on the upper side 512 of the panel body 510, and various modifications are possible within the technical concept in which a flow path is formed in the longitudinal direction (D) of the case part 100 to guide the movement of the fire extinguishing agent 400. According to some embodiments of the present disclosure, the first guide part 520 forms grooves on both sides in the width direction (W) of the partition protrusion 570, which will be described later, and the first guide part 520 extends in the longitudinal direction (D). Therefore, after falling on the panel body 510, the fire extinguishing agent 400 sprayed from the fire extinguishing pipe 310 is guided in the longitudinal direction (D) along the first guide part 520, and thus a fire occurring in the battery cell 200 disposed adjacent to the first guide part 520 can be extinguished relatively more quickly.

The second guide part 530 is installed on the upper side 512 of the panel body 510, and various modifications are possible within the technical concept in which a flow path is formed in the width direction (W) of the case part 100 to guide the movement of the fire extinguishing agent 400. According to some embodiments of the present disclosure, the second guide part 530 is located at the bottom portions the battery cells 200 and can form a flow path through which the fire extinguishing agent 400 moves along the width direction (W) of the panel body 510.

Because the first guide part 520 and the second guide part 530 are connected to each other, the fire extinguishing agent 400 in contact with the upper side 512 of the panel body 510 can be relatively quickly moved in the horizontal direction.

The support protrusion 540 protrudes from the upper side of the panel body 510 and various modifications are possible within the technical concept of supporting the bottom portions of the battery cells 200. According to some embodiments of the present disclosure, the support protrusion 540 is located at the center of the width direction (W) of the battery cells 200 and is shaped of a protrusion that protrudes upward from the panel body 510. The support protrusion 540 is provided as a plurality of support protrusions and is installed along the longitudinal direction (D) of the lower panel 500. As many as the support protrusions 540 may be installed to correspond to the rows in which battery cells 200 are installed.

When the support protrusion 540 is installed in a row direction, the support protrusion 540 and the neighboring support protrusion 540 may be installed so as to be spaced apart from each other. Because the support protrusion 540 protrudes upward from the upper side 512 of the panel body 510, a space for the fire extinguishing agent 400 to move is formed around the support protrusion 540.

The side protrusion 550 protruding upward is provided on both sides of the lower panel 500 in the width direction (W). The side protrusion 550, which protrudes upward from the upper side 512 of the panel body 510, supports the lower part of the battery cells 200 together with the support protrusion 540.

The reinforcement protrusion 560 is a protrusion located on both sides in the width direction (W) of the partition protrusion 570, which will be described later, and reinforces the structural rigidity of the panel body 510. The first guide part 520 is located between a pair of reinforcement protrusions 560. The reinforcement protrusions 560 protrude upward from the panel body 510 and provide a space for the fire extinguishing agent 400 to move. The reinforcement protrusions 560 can support the bottom portions of the battery cells 200 together with the support protrusions 540 and the side protrusions 550. The center of the battery cells 200 in the width direction (W) is supported by the support protrusion 540, first sides of the battery cells 200 in the width direction (W) are supported by the reinforcement protrusion 560, and second sides of the battery cells 200 in the width direction (W) can be supported by the side protrusion 550.

The fire extinguishing agent 400 may move through the space between the battery cells 200 and the panel body 510 where the reinforcement protrusion 560, the side protrusion 550, and the support protrusion 540 are not installed. Therefore, the fire extinguishing agent 400 dropped from the fire extinguishing pipe 310 can relatively quickly move through the space provided between the panel body 510 and the battery cells 200, thereby suppressing a fire at an early stage.

The partition protrusion 570 is installed at the center of the panel body 510 in the width direction (W). The partition protrusion 570 is installed in the longitudinal direction (D) together with the battery cells 200. The flame blocking member 600, which will be described later, is installed above the battery cells 200. The partition protrusion 570 is shaped of a protrusion protruding upward from the panel body 510, and a plurality of connecting passages 572 are formed in the width direction (W) of the partition protrusion 570. Therefore, when a fire occurs in the battery cells 200 located in the first row (A1), the fire extinguishing agent 400 may also be delivered to the upper side of the panel body 510 located in the second row (A2) through the connecting passage 572 even if the fire extinguishing agent 400 is supplied to the upper side of the panel body 510 located in the first row (A1).

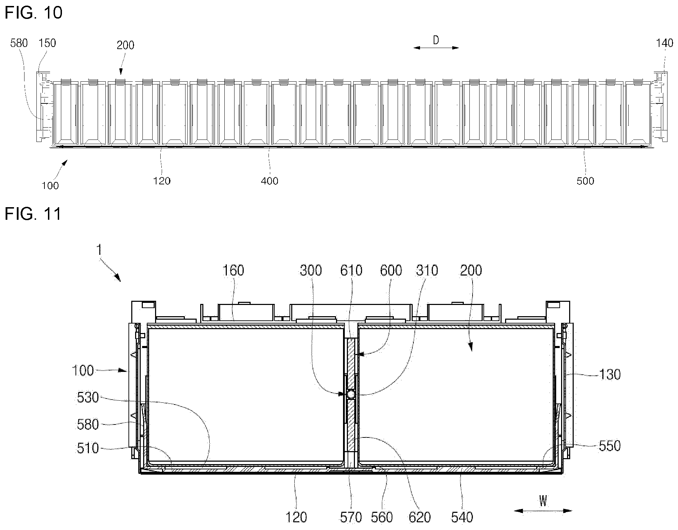

FIG. 9 is a front sectional view showing a state in which battery cells 200 are installed, according to some embodiments of the present disclosure, and FIG. 10 is a front sectional view showing a state in which a fire extinguishing agent 400 having moved to the bottom portions of battery cells 200 moves in the longitudinal direction, according to some embodiments of the present disclosure.

As shown in FIGS. 9 and 10, the edge member 580 protrudes upward from the edge of the panel body 510 and supports the lateral sides of the battery cells 200. The plurality of battery cells 200 may be arranged in a set row on the upper side of the panel body 510. Therefore, the battery cells 200 and the lower panel 500 are assembled separately in the form of a module and then combined with the case part 100, thereby saving the time required for an assembling process.

In an initial fire extinguishment state in which when a fire occurs, a portion of the fire extinguishing pipe 310 melts and the fire extinguishing agent 400 moves toward the lower panel 500, the movement of the fire extinguishing agent 400 is guided in the width direction (W) and longitudinal direction (D) of the case part 100 by the first guide part 520 and the second guide part 530.

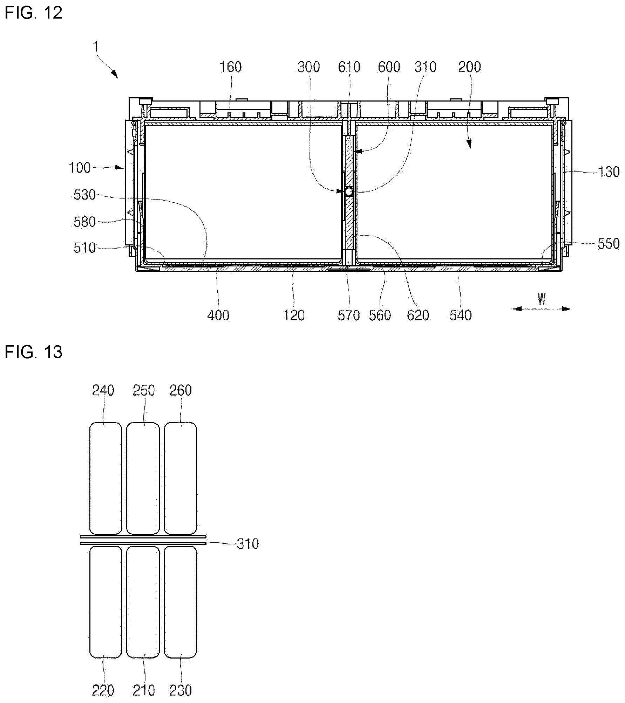

FIG. 11 is a side sectional view showing a state in which battery cells 200 are installed, according to some embodiments of the present disclosure, and FIG. 12 is a front sectional view showing a state in which a fire extinguishing agent 400 having moved to the bottom portions of battery cells moves in the width direction, according to some embodiments of the present disclosure.

As shown in FIGS. 11 and 12, the flame blocking member 600 is placed between the rows of the battery cells 200 along with the fire extinguishing pipe 310, and various modifications are possible within the technical concept in which flames spread between neighboring battery cells 200 are blocked. The flame blocking member 600 may be formed as a single member or, if necessary, may be formed as multiple members.

According to some embodiments of the present disclosure, the flame blocking member 600 includes an upper blocking member 610 and a lower blocking member 620.

The upper blocking member 610 has a plate shape, is located above the fire extinguishing pipe 310, and is installed in an erect shape. The lower blocking member 620 has a plate shape, is located on the lower side of the fire extinguishing pipe 310, and is installed in an erect shape. The lower end of the lower blocking member 620 is supported by the partition protrusion 570. According to some embodiments of the present disclosure, the flame blocking member 600 may include a plate-shaped upper blocking member 610 located on the upper side of the fire extinguishing pipe 310 and a plate-shaped lower blocking member 620 located on the lower side of the fire extinguishing pipe 310.

In the battery cells 200, heat may be generated during charging and discharging, which may cause a fire. Therefore, in the event of a fire, the flame blocking member 600 that effectively suppresses the fire and blocks propagation of fire is installed between the battery cells 200 and the neighboring battery cells 200.

According to some embodiments of the present disclosure, the flame blocking member 600 may have at least one property of fire resistance, heat resistance, gas shielding, and heat transfer blocking.

The heat resistance protects a device without deforming or dissolving even at high temperatures. The gas shielding property suppresses flames by emitting gases to prevent or reduce instances of flames spreading to surroundings. The heat transfer blocking property blocks heat transfer to the outside of the device and prevents or reduces flames spreading to surrounding materials.

The material of the flame blocking member 600 may be a fire-resistant fiber material, a refractory material, or a reinforced polymer.

Because the fire extinguishing pipe 310 is installed between the upper blocking member 610 and the lower blocking member 620, when a fire occurs in any of the battery cells 200, heat may be concentrated in the fire extinguishing pipe 310 and a portion of the fire extinguishing pipe 310 may melt, which allows rapid initial fire extinguishment.

Hereinafter, the energy storage device 1 with a fire extinguishing function, according to some embodiments of the present disclosure, will be described in detail with reference to the attached drawings.

As shown in FIGS. 1 and 5, when a fire occurs in any of the battery cells 200, the fire extinguishing pipe 310 melts due to the heat of fire, producing a passage for the fire extinguishing agent 400 to be ejected. The fire extinguishing agent 400 ejected to the outside of the fire extinguishing pipe 310 is sprayed toward the battery cell 200 where the fire has occurred, and thus can directly cool the battery cell 200 where the fire has occurred.

After the fire extinguishing agent 400 is sprayed directly onto the battery cell 200 where a fire has occurred, the sprayed liquid fire extinguishing agent 400 accumulates on the bottom portion of the lower panel 500. In addition, the fire extinguishing agent 400, which is guided in the width direction (W) and longitudinal direction (D) of the lower panel 500, is uniformly transferred to the upper side 512 of the lower panel 500, so that the bottom portions of the battery cells 200 are submerged in the fire extinguishing agent 400. By the fire extinguishing agent 400 accumulating inside the case part 100, the battery cell 200 where the fire has occurred and the other battery cell 200 placed adjacent thereto are continuously cooled.

Because the fire extinguishing agent 400 is sprayed directly into the case part 100, the occurrence of fire can be suppressed and cooling of combustible parts can be induced by creating a fire extinguishing atmosphere inside the energy storage device 1 with a fire extinguishing function.

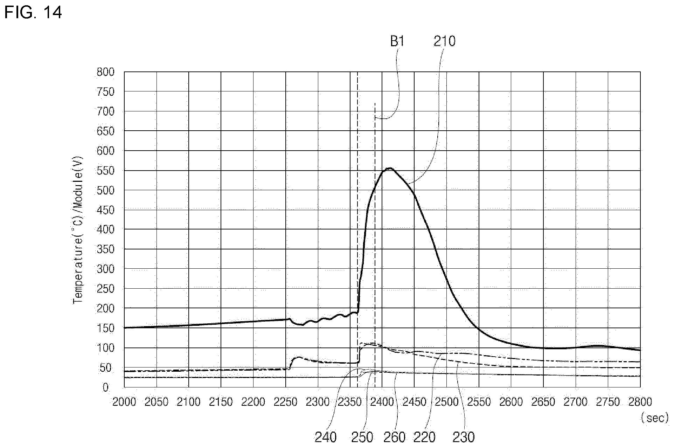

FIG. 13 is a plan view showing a state in which a fire has occurred in any of battery cells 200, according to some embodiments of the present disclosure, and FIG. 14 is a graphical representation of the temperatures of the battery cell 200 where a fire is extinguished by the operation of an energy storage device 1 with a fire extinguishing function, according to some embodiments of the present disclosure.

As shown in FIGS. 13 and 14, a first battery 220 and a second battery 230 are installed on both sides of a fired battery 210, and it is assumed that a fourth battery 250 is installed at a position facing the fired battery 210 with the fire extinguishing pipe disposed therebetween, and a fifth battery 260 and a third battery 240 are installed on both sides of the fourth battery 250.

Due to the fire occurring in the fired battery 210, the fire extinguishing pipe 310 melts to primarily extinguish the fire in the fired battery 210, the level of the fire extinguishing agent 400 discharged from the fire extinguishing pipe 310 gradually increases, and the battery cells 200 are submerged in the fire extinguishing agent 400, and the fire occurring in the fired battery 210 is secondarily extinguished.

As shown in the graph of FIG. 14, it can be seen that as time passes at a point "B1" where the fire extinguishing agent 400 is sprayed, the temperature of the fired battery 210 decreases and the fire of the fired battery 210 is extinguished.

In addition, the temperatures of the first to fifth batteries 220-260, the temperatures of which were increasing along with the fired battery 210, gradually decrease as the ejection time of the fire extinguishing agent 400 increases.

As described above, according to some embodiments of the present disclosure, the fire extinguishing pipe 310 that supplies the fire extinguishing agent 400 extends to the inside of the case part 100, and the fire extinguishing agent 400 can be sprayed directly into the inside of the case part 100, thereby reducing the time and costs required to extinguish a fire. In addition, when a fire occurs, by supplying the fire extinguishing agent 400 to the inside of the case part 100, the battery module may be submerged in the fire extinguishing agent 400, thereby relatively quickly extinguishing the fire. In addition, because the fire extinguishing agent 400 can be supplied directly to the battery module where a fire occurs, the fire can be extinguished at an early stage, and the damages caused by the fire can be minimized or reduced. In addition, the fire extinguishing pipe 310 is made of a material that melts by the heat generated by a fire, and when a fire occurs, the fire extinguishing pipe 310 melts to stably supply the fire extinguishing agent 400, thereby relatively improving the operational reliability of the fire extinguishing unit 300.

As described above, according to some embodiments of the present disclosure, in the energy storage device with a fire extinguishing function, according to some embodiments of the present disclosure, a fire extinguishing pipe that supplies a fire extinguishing agent extends to the inside of a case, and the fire extinguishing agent can be sprayed directly into the inside of the case, thereby saving the costs and time required for extinguishing a fire.

In addition, according to some embodiments of the present disclosure, a fire can be relatively quickly extinguished by supplying a fire extinguishing agent to the inside of the case part when a fire occurs, so that a battery module may be submerged in the fire extinguishing agent.

In addition, according to some embodiments of the present disclosure, a fire can be extinguished at an early stage by supplying a fire extinguishing agent directly to a battery module where a fire has occurred, thereby minimizing or reducing damage due to the fire.

In addition, according to some embodiments of the present disclosure, a fire extinguishing pipe may be made of a material that melts due to heat generated from a fire, and when a fire occurs, a fire extinguishing agent can be stably supplied while the fire extinguishing pipe melts, thereby relatively improving the operational reliability of a fire extinguishing unit.

## Claims

1. An energy storage device, comprising:
a case having a mounting space inside the case;
a plurality of battery cells installed inside the case; and
a fire extinguishing unit extending inside the case and configured to supply a fire extinguishing agent,
wherein the fire extinguishing unit is configured to supply an extinguishing liquid to at least one of the battery cells or the mounting space while melting at a temperature of a threshold value or higher.

2. The energy storage device as claimed in claim 1, wherein the fire extinguishing unit comprises:
a fire extinguishing pipe extending along a longitudinal direction of the case and configured to supply a fire extinguishing agent to at least one of the battery cells or the mounting space through a portion melted by heat; and
a connecting pipe connecting the fire extinguishing pipe and a supply pipe located outside the case.

3. The energy storage device as claimed in claim 2, wherein a melting temperature of the fire extinguishing pipe is in a range between 80 °C and 300 °C.

4. The energy storage device as claimed in claim 2 or claim 3, wherein:
(i) a material of the fire extinguishing pipe includes a plastic material; or
(ii) a material of the fire extinguishing pipe includes at least one of polypropylene (PP), linear low density polyethylene (LLDPE), polyvinyl chloride (PVC), polyamide 6 (PA6), and polyamide 66 (PA66).

5. The energy storage device as claimed in any one of claims 2 to 4, wherein an inner diameter of the fire extinguishing pipe is in a range of 3 mm to 20 mm.

6. The energy storage device as claimed in any one of claims 2 to 5, wherein the fire extinguishing pipe is installed in a state of facing lateral sides of the battery cells, optionally wherein the battery cells are arranged in multiple rows along a width direction of the case, and the fire extinguishing pipe is placed between rows of the battery cells.

7. The energy storage device as claimed in any one of claims 1 to 6, further comprising a lower panel between a bottom surface of the case and the battery cells to support bottom portions of the battery cells and block the fire extinguishing agent supplied through the fire extinguishing unit from moving to the bottom surface of the case.

8. The energy storage device as claimed in claim 7, wherein the lower panel comprises:
a panel body that is installed in a plate shape between a bottom portion of the case and the battery cell to block a movement of the fire extinguishing agent;
a first guide on an upper side of the panel body and forming a flow path in a longitudinal direction of the case to guide the movement of the fire extinguishing agent; and
a second guide on the upper side of the panel body and guiding the movement of the fire extinguishing agent by forming a flow path in a width direction of the case.

9. An energy storage device with a fire extinguishing function, comprising:
a case having a mounting space inside the case;
a plurality of battery cells inside the case;
a fire extinguishing unit extending inside of the case and configured to supply a fire extinguishing agent to at least one of the battery cells or the mounting space; and
a lower panel between a bottom surface of the case and the battery cells to support bottom portions of the battery cells and block a movement of the fire extinguishing agent toward the bottom surface of the case to enable the fire extinguishing agent to be sprayed from the fire extinguishing unit inside the case.

10. The energy storage device as claimed in claim 9, wherein the lower panel comprises:
a panel body having a plate shape between the bottom surface of the case and the battery cells to block the movement of the fire extinguishing agent;
a first guide on an upper side of the panel body and forming a flow path in a longitudinal direction of the case to guide the movement of the fire extinguishing agent;
a second guide on the upper side of the panel body and forming a flow path in a width direction of the case to guide the movement of the fire extinguishing agent; and
a support protrusion that protrudes upward from the panel body and supports the bottom portions of the battery cells, optionally wherein the lower panel further comprises an edge member that protrudes upward from edges of the panel body and supports lateral sides of the battery cells.

11. The energy storage device as claimed in claim 9 or claim 10, wherein the lower panel comprises an insulating material.

12. The energy storage device as claimed in any one of claims 9 to 11,
wherein the fire extinguishing unit comprises:
a fire extinguishing pipe extending along a longitudinal direction of the case and configured to supply a fire extinguishing agent to at least one of the battery cells or the mounting space through a portion melted by heat; and
a connecting pipe connecting the fire extinguishing pipe and a supply pipe located outside the case, optionally wherein a material of the fire extinguishing pipe includes at least one of polypropylene (PP), linear low density polyethylene (LLDPE), polyvinyl chloride (PVC), polyamide 6 (PA6), or polyamide 66 (PA66).

13. The energy storage device as claimed in claim 12, wherein the battery cells are arranged in multiple rows along a width direction of the case, and the fire extinguishing pipe is between rows of the battery cells, optionally wherein the fire extinguishing pipe is installed in a state of facing lateral sides of the battery cells.

14. The energy storage device as claimed in claim 13, further comprising a flame blocking member between rows of the battery cells, along with the fire extinguishing pipe, to block flame propagation between neighboring battery cells, optionally wherein the flame blocking member comprises:
a plate-shaped upper blocking member on an upper side of the fire extinguishing pipe; and
a plate-shaped lower blocking member on a lower side of the fire extinguishing pipe.

15. The energy storage device as claimed in any one of claims 12 to 14, wherein a melting temperature of the fire extinguishing pipe is in a range between 80 °C and 300 °C.
